# EUROPEAN PATENT APPLICATION

(11) **EP 2 230 070 A1**
(43) Date of publication of application: **22.09.2010**
(21) Application number: 09154538.4
(22) Date of filing: 06.03.2009
(51) Int. Cl.: B29C 70/48, B29C 33/34, B29L 31/08

(54) **Method and manufacturing line for manufacturing wind turbine blades**

(71) Applicant: LM GLASFIBER A/S, 6000 Kolding (DK)
(72) Inventor: Mortensen, Ivan Engmark, 6000, Kolding (DK)
(74) Representative: Kitchen, Steven Richard

(57) **Abstract**

A method and a manufacturing line (30) for manufacturing wind turbine blades having a composite shell structure comprising a matrix material and a fibre reinforcement material by use of a resin transfer moulding process. The method comprises a manufacturing line (30), where wind turbine blades are formed in a number of moulds (40,50,60). The manufacturing line (30) further comprises a number of separate work stations (31,32,33), where separate manufacturing steps are carried out. The method comprises the following steps: a) arranging the fibre reinforcement material in a first mould cavity (42) of a first mould part (40) at a first work station (31), b) moving the first mould part (40) with the fibre reinforcement materials by use of conveying means to a second work station (32) having a different position than the first work station (31), and c) supplying a curable matrix material into the first mould cavity (42) of the first mould part (41) at the second work station (32).

## Description

### Technical field

The present invention relates to a method for manufacturing wind turbine blades having a composite shell structure comprising a matrix material and a fibre reinforcement material by use of a resin transfer moulding process. The invention also relates to a manufacturing line for manufacturing wind turbine blades having a composite shell structure comprising a matrix material and a fibre reinforcement material by use of a resin transfer moulding process.

### Background Art

It is known to manufacture wind turbine blades using project oriented manufacturing methods, e.g. where each of the wind turbine blades are moulded and assembled at the same work shop, whereafter the wind turbine blade optionally is moved to another work shop, typically a finishing work shop, where the wind turbine blade is cut, trimmed, painted and the final fittings are mounted on the wind turbine blade. The wind turbine blades are often made of fibre-reinforced polymer and are usually manufactured as shell parts in moulds, where the top side and the bottom side of the blade profile (typically the pressure side and suction side, respectively) are manufactured separately by arranging glass fibre mats in each of the two mould parts and injecting a liquid resin, which subsequently is cured. Afterwards, the two halves are glued together, often by means of internal flange parts. Glue is applied to the inner face of the lower blade half before the upper blade half is lowered thereon or vice versa. Additionally, one or two reinforcing profiles (beams) are often attached to the inside of the lower blade half prior to gluing to the upper blade half.

The shell parts for the wind turbine blade are typically manufactured as fibre composite structures by means of VARTM (vacuum assisted resin transfer moulding), where liquid polymer, also called resin, is filled into a mould cavity, in which fibre reinforcement material priorly has been inserted, and where a vacuum is generated in the mould cavity, hereby drawing in the polymer. The polymer can be thermoset plastic or thermoplastics.

Vacuum infusion or VARTM is a process used for moulding fibre composite mouldings, where uniformly distributed fibres are layered in one of the mould parts, the fibres being rovings, i.e. bundles of fibre bands, bands of rovings, or mats, which are either felt mats made of individual fibres or woven mats made of fibre rovings. The second mould part is often made of a resilient vacuum bag, and is subsequently placed on top of the fibre reinforcement material. By generating a vacuum, typically 80% to 95% of the total vacuum, in the mould cavity between the inner side of the mould part and the vacuum bag, the liquid polymer can be drawn in and fill the mould cavity with the fibre reinforcement material contained herein. So-called distribution layers or distribution tubes, also called inlet channels, are used between the vacuum bag and the fibre reinforcement material in order to obtain as sound and efficient a distribution of polymer as possible. In most cases, the polymer applied is polyester or epoxy, and the fibre reinforcement is most often based on glass fibres and/or carbon fibres.

It is commonly known that moulds for making large articles, such as wind turbine blades, can consist of two mould parts that are closed about a longitudinal hinge line, where the hinges are passive, i.e. a crane is used to lift one of the mould parts about the hinge line for closure and opening of the mould. When making wind turbine blades, the mould is closed so as to glue two blade shell halves together, said shell halves being produced in separate mould parts. Alternatively, wind turbine blades can be manufactured as disclosed in EP 1 310 351.

However, as the demand for wind turbines is rapidly increasing it is found increasingly difficult to scale the conventional project oriented manufacturing method to accommodate the demand for several reasons as listed in the following: Firstly, the project oriented manufacturing method requires that all the materials required for manufacturing a wind turbine blade, e.g. resin and fibre reinforcement material, has to be transported to every work shop, which is logistically demanding. Secondly, every work shop has to be equipped with tools and gear necessary for every single manufacturing step in the process, which yields an overhead of resources. Additionally, the conventional project oriented manufacturing method requires a mould in every single work shop, which is expensive, since production and maintenance of moulds are time consuming and thus expensive. Furthermore, the conventional project oriented manufacturing method occupies a lot of space, and since the workers at each work shop have to perform a variety of manufacturing steps, there is a risk that the quality of the manufactured wind turbine blades may suffer.

It is therefore an object of the invention to obtain a new method and manufacturing line for manufacturing wind turbine blades, which both overcomes or ameliorates at least one of the disadvantages of the prior art or which both provides a useful alternative.

### Disclosure of Invention

The object of the invention is obtained by a method which comprises a manufacturing line, where wind turbine blades are formed in a number of moulds, each of the number of moulds comprising at least a first mould part comprising a first mould cavity, the manufacturing line further comprises a number of separate work stations, where separate manufacturing steps are carried out, wherein the method comprises the following steps: a) arranging the fibre reinforcement material in a first mould cavity of a first mould part at a first work station, b) moving the first mould part with the fibre reinforcement materials by use of conveying means to a second work station having a different position than the first work station, and c) supplying a curable matrix material into the first mould cavity of the first mould part at the second work station. Hereby, a method is provided whereby wind turbine blades can be manufactured using fewer resources e.g. moulds and tools, or alternatively improving the throughput as the method increases the number of manufactured wind turbine blades per time unit compared to conventionally project oriented manufacturing methods. As an example, the method can in a setup with three work stations and three moulds increase the throughput from 3 to 6 wind turbine blades per 24 hours. Since the mould sets are movable in relation to the work stations, the method furthermore provides that each work station can be equipped with specialized and advanced equipment that is dedicated to the manufacturing step carried out at each work station, as the method reduces the required number of work stations. Additionally, each work station can be manned with specialized workers that are skilled and trained in the manufacturing step carried out at that particular work station. However, some of the work stations can also be automated, e.g. by using robots, such that fewer workers are needed. Automation is also expected to additionally improve the quality of the manufactured wind turbine blades.

In step c) the curable matrix material is infused. The matrix material is typically a resin such as polyester, vinylester, or epoxy.

The matrix material is injected by use of resin transfer moulding (RTM), wherein a positive pressure differential is used to inject the resin into the mould cavity, or by use of vacuum assisted resin transfer moulding (VARTM), wherein an underpressure is formed in the mould cavity, thereby drawing the liquid resin into the mould cavity.

The conveying means comprises at least four wheels and/or rollers mounted on each of the number of moulds, whereby the number of moulds easily can be moved. The conveying means may also comprise rails or tracks on which the moulds can transported.

According to a first embodiment, the method comprises the following step: d) moving the first mould part, while the matrix material is curing, by conveying means from the second work station to a third work station having a different position than the first and the second work station. Hereby, the method reduces the manufacturing time, as the first mould is being moved from the second work station to the third work station while the matrix material that was infused in step b) is still curing.

In another embodiment, the first mould comprises at least a first mould part and a second mould part, that can be assembled to form a closed mould assembly, each mould part comprising a mould cavity. Thus, each mould part can be used so as to form separate shell parts of a wind turbine blade. The shell parts are typically constructed as a lower part, e.g. a suction side, of the blade, and an upper part, e.g. a pressure side, of the blade. The shell parts are then later adhered to each other, e.g. by gluing flanges located at the leading edge and trailing edge of the finished wind turbine blade. Thus, the mould part comprises a moulding surface, which defines a part of the outer side of the finished blade. The mould cavity of each mould part can be formed by sealing a vacuum bag to the mould part. A vacuum source can be coupled to the mould cavity so that the mould cavity can be evacuated prior to injecting the liquid matrix material.

The method can comprise an additional step that follows step d), which comprises removing the vacuum bags from each of the separate mould parts.

In another embodiment, the method comprises the following steps: e) assembling the separate mould parts of the first mould and applying an adhesive between the shell parts, f) moving the first mould, while the adhesive is curing, by conveying means from the third work station to the first work station.

In another embodiment, the method comprises the following step: g) opening the closed mould assembly at the first work station and removing the manufactured wind turbine blade. Hereby, the method provides that the handling of the first mould is optimized, as the first mould is opened at the first work station, which is the same work station where the first mould is reused for manufacturing yet another wind turbine blade by repeating the method.

In another embodiment, the number of moulds are at least the same as the number of work stations on the manufacturing line, and the moulds are circulated in a permuated manner between the work stations, such that a continuous manufacturing line is established. Hereby, the method provides that a continuous manufacturing line is established as the work stations can perform work on at least one mould at the time, until the moulds are circulated. The method is particularly efficient if the process time is similar for each work station, such that the moulds can move synchronously. However, in the case that the work stations has significant differences in process time, additional moulds can be added to the manufacturing line, such that a buffer zone is established. In a preferred embodiment the manufacturing line comprises 3 moulds and 3 work stations. In another embodiment step b) and d) is each performed within 15 minutes, whereby the method by the conveying means provides an effective and quick transportation of the moulds. To achieve a manufacturing line with a continuous flow, it is not only important that the process time at each work station is similar, but also that the time it takes to move the moulds is similar. In another embodiment, step a) and c) is each performed within 1 or at least 2 hours and in yet another embodiment, one full circulation of the number of moulds on the manufacturing line is performed within 12 hours, whereby the method provides that e.g. 6 wind turbine blades can be manufactured in a preferred embodiment with 3 moulds and 3 work stations, which is twice as many manufactured wind turbine blades as compared to the number a conventional project oriented manufacturing method can produce in a similar setup with 3 moulds. Furthermore, a 12 hour cycle is compatible with typical working shifts at a manufacturing facility.

In another embodiment, the moulds are moved substantially in a longitudinal direction (L) of the moulds, when being moved by the conveying means. I.e. in the direction corresponding to the direction from a blade root to a blade tip.

In another embodiment, the fibre reinforcement material is dry, e.g. not pre-impregnated with resin, when arranged in the number of moulds. However, the method can also be performed with pre-impregnated fibre reinforcement material or a semi-impregnated fibre reinforcement material. The fibre reinforcement material and/or additional reinforcement material, that can be pre-impregnated, is preferably arranged in the moulds such that a longitudinal reinforcement structure is formed and provides mechanical strength to the manufactured wind turbine blade.

In another embodiment, the manufactured wind turbine blades have a length of at least 30 meters, or 40 meters, or 50 meters.

In another embodiment, the method further comprises a finalisation line having a number of finishing stations. Hereby, the method provides that the manufactured wind turbine blades can be finished. The finishing stations comprises a quality inspection station, a cut and trim station, a finish station and a painting station, where the cut and trim station and the painting station can be automated. The finalisation line is preferably placed in the same production hall as the manufacturing line, thus separate air cleaning facilities are required for some of the finishing stations to maintain a clean and acceptable working enviroment in the production hall.

In another embodiment, the first work station on the manufacturing line and the first finishing station on the finalisation line are juxtaposed. Thereby, the manufactured wind turbine blade, when removed from the first mould, only needs to be transported a short distance to the first finishing station. Furthermore, the handling of the first mould and the manufactured wind turbine blade is minimized. The manufacturing line and the finalisation line can also be arranged in parallel.

In another embodiment, the wind turbine blade is moved by crane means from the first work station on the manufacturing line to the first finishing station on the finalisation line.

In another embodiment, the number of moulds have different shapes and/or lengths, such that the method produces wind turbine blades with different properties. Hereby, the method provides that wind turbine blades with different shapes and/or lengths can be manufactured by the same manufacturing line and/or finalisation line, thus separate lines for each wind turbine blade type is not necessary, which makes the method even more cost-effective.

The object of the invention is also achieved by that the manufacturing line comprises a number of moulds, the number being greater than one, where wind turbine blades are formed in, each of the number of moulds comprising at least a first mould part comprising a first mould cavity, and in that the manufacturing line further comprises a number of separate work stations and in that each of the number of moulds are movable along the manufacturing line by conveying means. Hereby, a manufacturing line is provided where a continuous production of wind turbine blades is possible. The manufacturing line requires fewer resources e.g. moulds and tools, or alternatively improves the throughput as compared to conventionally project oriented manufacturing methods. The manufacturing line can, as an example, in a setup with three moulds and one gantry means increase the number of manufactured wind turbine blades from 3 to 6 wind turbine blades per 24 hours. The manufacturing line can additionally be automated, which is expected to further improve the throughput and additionally the quality of the manufactured wind turbine blades.

According to a first embodiment, the number of work stations are arranged in longitudinal extension of a first workstation. The manufacturing line can further comprise a finalisation line comprising a number of finishing stations comprising a quality inspection station, a cut and trim station, a finish station and/or a painting station, where the cut and trim station and the painting station can be automated. The finalisation line is preferably placed in the same production hall as the manufacturing line, thus separate air cleaning facilities are required for some of the finishing stations to maintain a clean and acceptable working environment in the production hall. The finalisation line is preferably arranged in parallel and/or juxtaposed to the manufacturing line. The manufacturing line can comprise moulds with different shapes, geometry and/or lengths, such that the manufacturing line can produce wind turbine blades with different properties, and not only one type and/or size of wind turbine blades. However, the manufacturing line preferably produces wind turbine blades having a length of at least 30 meters, or 40 meters, or 50 meters. Furthermore, the fibre reinforcement material used at the manufacturing line is preferably dry, e.g. not pre-impregnated with resin, when arranged in the number of moulds. However, the manufacturing line can also handle pre-impregnated fibre reinforcement material and/or semi-impregnated fibre reinforcement material. The fibre reinforcement material and/or additional reinforcement material, that can be pre-impregnated, is preferably arranged in the moulds such that a longitudinal reinforcement structure is formed and provides mechanical strength to the manufactured wind turbine blade.

### Brief Description of the Drawing

The invention is explained in detail below with reference to an embodiment shown in the drawings, in which
- Fig. 1: shows a prior art wind turbine,
- Fig. 2: shows a wind turbine blade,
- Fig. 3: shows a manufacturing line with a first mould during step a) and c) according to the invention,
- Fig. 4: shows a manufacturing line with a first mould during step a), c) and e) according to the invention,
- Fig. 5: shows a manufacturing line with a first, second and third mould during step a), c) and e) according to the invention, and
- Fig. 6: shows a manufacturing line with a first, second and third mould during step a), c) and e) and a finalisation line according to the invention.

### Detailed description

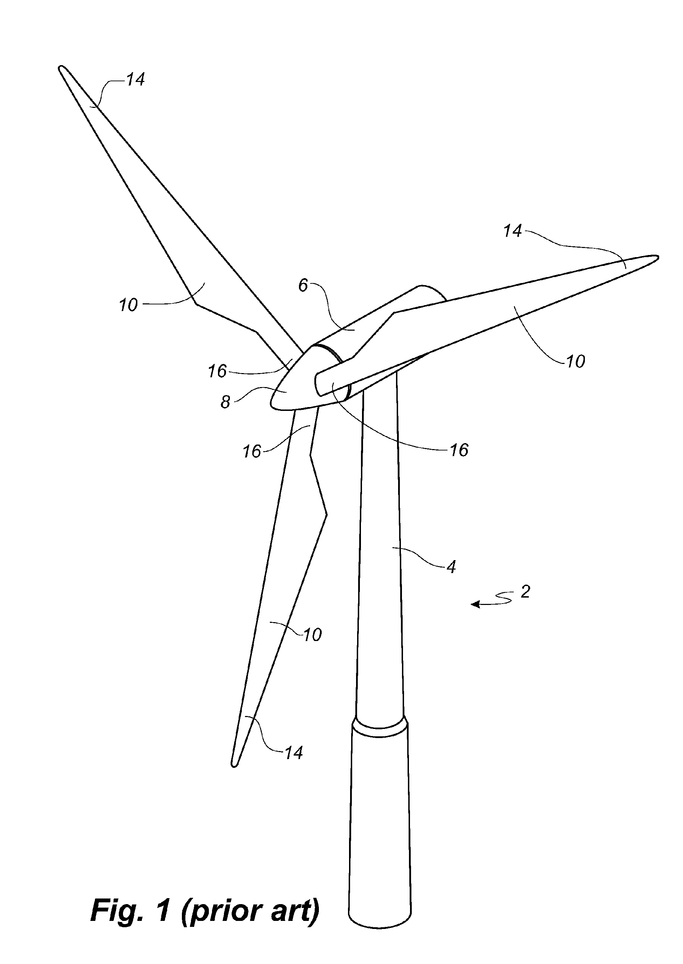

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub 8 and a blade tip 14 furthest from the hub 8.

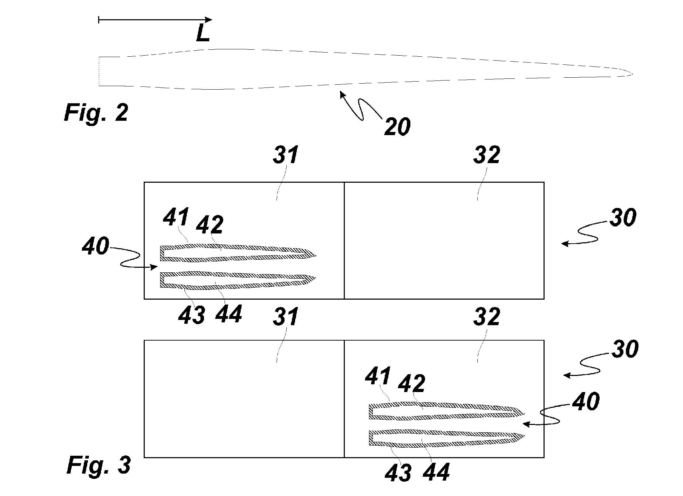

Fig. 2 illustrates a conventional wind turbine blade 20, which conventionally is manufactured either in one piece or in two pieces, where each of the two pieces has the same length in the longitudinal direction L as a wind turbine blade assembled by the two pieces.

Fig. 3 illustrates a manufacturing line 30 with a first work station 31 and a second work station 32 and a first mould 40 movable between the first work station 31 and the second work station 32. The first mould 40 comprises a first mould part 41 comprising a first mould cavity 42, the first mould cavity 42 corresponds to the envelope of the lower side of a wind turbine blade, e.g. the suction side of the blade, and a second mould part 43 having a second mould cavity 44 corresponding to the envelope of the upper side of a wind turbine blade, e.g. the pressure side of the blade. Separate manufacturing steps is carried out at each of the first work station 31 and the second work station 32. At the first work station 31 a manufacturing step a) is carried out. In this step fibre reinforcement material is arranged in each of the separate mould parts 41,43 of the first mould 40 that at this point in time, is located at the first work station 31. The arranging of fibre reinforcement material in each of the separate mould parts 41,43 in step a) can be carried out manually or in automated way, and can be done using a gantry, which is either shared by the separate mould parts 41,43 or by using separate gantries for each separate mould part 41,43. The mould cavities 42,44 of the mould parts 41,43 are normally coated with a gelcoat or the like before the fibre reinforcement material is arranged. The fibre reinforcement material may comprise fibres in many forms such as tows, mats, prepregs and preforms. The fibres may be of any material, but is preferably made of glass and/or carbon. Alternatively plant fibres or metallic fibres, such as steel fibres, may be utilised. After arranging the fibre reinforcement material, the first mould 40 is prepared for infusion of a curable matrix material. Typically, a RTM or VARTM process is used, and the separate mould parts 41, 43 is each prepared by arranging resin inlet channels on top of the fibre reinforcement material in each of the separate mould parts 41,43. Subsequently, each separate mould part 41,43 is covered and sealed by an air tight vacuum bag, thus creating a mould cavity. Thereby, a vacuum can be created between the mould part 41, 43 and the vacuum bag, so that the curable matrix material can be drawn into the mould cavity and impregnating the fibre reinforcement material via the resin inlet channels. The arrangement of the inlet channels and covering and sealing of each of the mould parts 41, 43 of the first mould 40 with a vacuum bag can be carried out during step a) or the first mould 40 can be moved to the second work station 32, where this step also can be carried out. The primary manufacturing step carried out at the second work station 32 is preferably supplying curable matrix material, e.g. a liquid resin, as described above. Typically, the matrix material is infused from the root area.

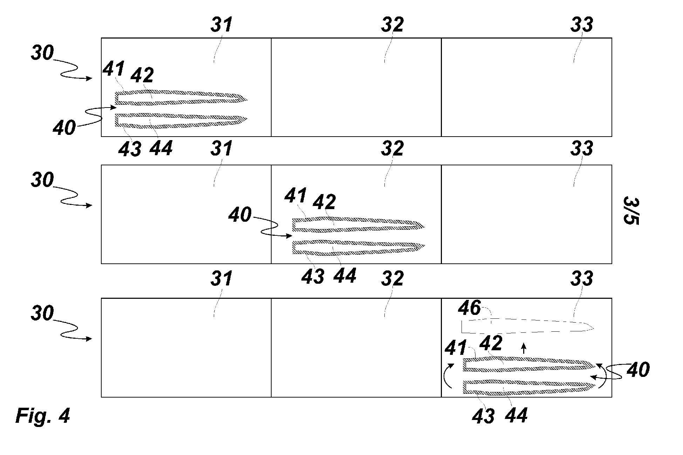

Fig. 4 illustrates a manufacturing line 30 similar to that depicted in Fig. 3. However, the manufacturing line 30 has been extended with a third work station 33 following the second work station 32. The first mould 40 is moved to the third work station 33 after the infusion of matrix material has been completed, but not necessarily before the matrix material is fully cured, and thus forming separate shell parts. When the first mould 40 has been moved to the third work station 33, the vacuum bags are first removed, after which some rework of the separate shell parts may be necessary before adhesive for joining the separate shell parts is applied and the separate mould parts 41,43 are assembled so that a closed mould assembly 46 is formed.

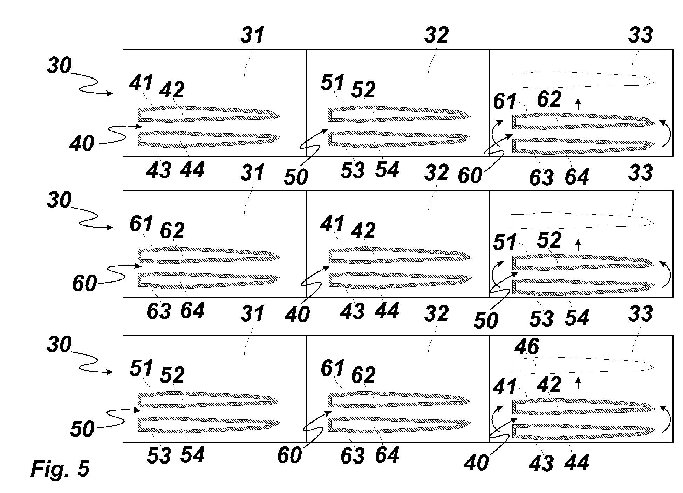

Fig. 5 illustrates a manufacturing line 30 as shown in Fig. 4, but with the addition of utilising a second mould 50 and a third mould 60 also, such that a continuous manufacturing line 30 is established. Thus step a) is performed at the first work station 31 substantially simultaneous with step c) being performed at the second work station 32, and step e) is performed substantially simultaneously at the third work station 33. After each of these steps are performed, step b), d) and f) are performed such that the first mould 40, the second mould 50 and the third mould 60 each are moved to the next work station, such that the continuous manufacturing line is established.

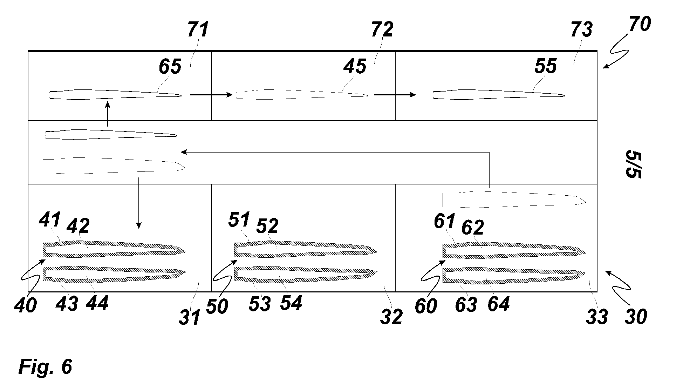

Fig. 6 illustrates the manufacturing line 30 as shown in Figs. 4 and 5, and a finalisation line 70 having a first finishing station 71, a second finishing station 72, and a third finishing station 73. At the first finishing station 71 a quality check of the manufactured wind turbine blade 45, 55, 65 is performed, while cutting and trimming of the manufactured wind turbine blade 45, 55, 65 is carried out at the second finishing station 72. At the third finishing station 73 the manufactured wind turbine blade 45, 55, 65 is coated with a paint. Fig. 6 illustrates a snap shot of the method having reached a steady state production of wind turbine blades. The first mould 40 is located at the first work station 31, where step a) is being performed, while the second mould 50 is located at the second work station 32, where step c) is being performed, and the third mould 60 is located at the third work station 33, where step e) is being performed. At the first finishing station 71, a third wind turbine blade 65 is located, which has been formed by the third mould 60, while at the second finishing station 72, a first wind turbine blade 45 is located which has been formed by the first mould 40, and finally at the third finishing station 73, a second wind turbine blade 55 is located, which has been formed by the second mould 50. The moulds 40, 50, 60 are thus circulated in a permuated manner between the first work station 31, the second work station 32 and the third work station 33, such that when a mould 40, 50, 60 leaves the third work station 33 it is returned to the first work station 31, which defines one circulation of moulds 40, 50, 60. The moulds are preferably transported to the first work station 31 as a closed mould assembly, whereafter the moulds 40, 50, 60 are opened and the manufactured wind turbine blade 45, 55, 65 is removed and moved to the first finishing station 71, while the separate mould parts 41, 43, 51, 53, 61, 63 are placed at the first work station 31. In Fig. 6, the manufacturing line 30 and the finalisation line 70 are parallel with a transport area in between. However, the manufacturing line 30 and the finalisation line 70 can also be juxtaposed, without having the transport area in between. The manufacturing line 30 and the finalisation line are preferably placed in one production facility, such that the handling is minimized.

The method and the manufacturing line 30 can also be performed where the moulds 40, 50, 60 are closed before supplying curable matrix material, such that an integral wind turbine blade is formed, e.g. without a seam.

The invention has been described with reference to a preferred embodiment. However, the scope of the invention is not limited to the illustrated embodiment, and alterations and modifications can be carried out without deviating from the scope of the invention.

### Reference numerals

- 2: wind turbine
- 4: tower
- 6: nacelle
- 8: hub
- 10: blade
- 14: blade tip
- 16: blade root
- 20: wind turbine blade
- 30: manufacturing line
- 31: first work station
- 32: second work station
- 33: third work station
- 40: first mould
- 41: first mould part (of first mould 40)
- 42: first mould cavity (of first mould part 41)
- 43: second mould part (of first mould 40)
- 44: first mould cavity (of second mould part 43)
- 45: wind turbine blade (shaped from the first mould 40)
- 46: closed mould assembly
- 50: second mould
- 51: first mould part (of second mould 50)
- 52: first mould cavity (of first mould part 51)
- 53: second mould part (of second mould 50)
- 54: first mould cavity (of second mould part 53)
- 55: wind turbine blade (shaped from the second mould 50)
- 60: third mould
- 61: first mould part (of third mould 60)
- 62: first mould cavity (of first mould part 61)
- 63: second mould part (of third mould 60)
- 64: first mould cavity (of second mould part 63)
- 65: wind turbine blade (shaped from the third mould 60)
- 70: finalisation line
- 71: first finishing station
- 72: second finishing station
- 73: third finishing station

## Claims

1. A method for manufacturing wind turbine blades having a composite shell structure comprising a matrix material and a fibre reinforcement material by use of a resin transfer moulding process, **characterised in that** the method comprises a manufacturing line (30), where wind turbine blades are formed in a number of moulds (40), each of the number of moulds (40) comprising at least a first mould part (41) comprising a first mould cavity (42), the manufacturing line (30) further comprises a number of separate work stations (31, 32), where separate manufacturing steps are carried out, wherein the method comprises the following steps:
a) arranging the fibre reinforcement material in a first mould cavity (42) of a first mould part (41) at a first work station (31),
b) moving the first mould part (41) with the fibre reinforcement materials by use of conveying means to a second work station (32) having a different position than the first work station (31), and
c) supplying a curable matrix material into the first mould cavity (42) of the first mould part (41) at the second work station (32).

2. A method according to claim 1, wherein the method comprises the following step:
d) moving the first mould part (41), while the matrix material is curing, by conveying means from the second work station (32) to a third work station (33) having a different position than the first (31) and the second work station (32).

3. A method according to claim 1 or 2, wherein the first mould (40) comprises at least a first mould part (41) and a second mould part (43), that can be assembled to form a closed mould assembly (46), each mould part (41, 43) comprising a mould cavity (42, 44).

4. A method according to claim 3, wherein the method comprises the following steps:
e) assembling the separate mould parts (41, 43) of the first mould (40) and applying an adhesive between the shell parts,
f) moving the first mould (40), while the adhesive is curing, by conveying means from the third work station (33) to the first work station (31).

5. A method according to any of the preceding claims, wherein the method comprises the following step:
g) opening the closed mould assembly (46) at the first work station (31) and removing the manufactured wind turbine blade (45).

6. A method according to any of the preceding claims, wherein the number of moulds (40, 50, 60) are at least the same as the number of work stations (31, 32, 33) on the manufacturing line (30), and the moulds (40, 50, 60) are circulated in a permuated manner between the work stations (31, 32, 33), such that a continuous manufacturing line (30) is established.

7. A method according to any of the preceding claims, wherein the moulds (40, 50, 60) is moved substantially in a longitudinal direction (L) of the moulds, when being moved by the conveying means.

8. A method according to any of the preceding claims, wherein the fibre reinforcement material is dry, e.g. not pre-impregnated with resin, when arranged in the number of moulds (40, 50, 60).

9. A method according to any of the preceding claims, wherein the manufactured wind turbine blades have a length of at least 30 meters, or 40 meters, or 50 meters.

10. A method according to any of the preceding claims, wherein the method further comprises a finalisation line (70) having a number of finishing stations (71, 72, 73).

11. A method according to any of the preceding claims, wherein the first work station (31) on the manufacturing line (30) and the first finishing station (71) on the finalisation line (70) are juxtaposed.

12. A method according to any of the preceding claims, wherein the wind turbine blade is moved by crane means from the first work station (31) on the manufacturing line (30) to the first finishing station (71) on the finalisation line (70).

13. A method according to any of the preceding claims, wherein the number of moulds (40, 50, 60) have different shapes and/or length, such that the method produces wind turbine blades (45, 55, 65) with different properties.

14. A manufacturing line (30) for manufacturing wind turbine blades having a composite shell structure comprising a matrix material and a fibre reinforcement material by use of a resin transfer moulding process, **characterised in that** the manufacturing line (30) comprises a number of moulds (40, 50, 60), the number being greater than one, where wind turbine blades (45, 55, 65) are formed in, each of the number of moulds (40, 50, 60) comprising at least a first mould part (41, 51, 61) comprising a first mould cavity (42, 52, 62), and **in that** the manufacturing line (30) further comprises a number of separate work stations (31, 32, 33) and **in that** each of the number of moulds (40, 50, 60) are movable along the manufacturing line (30) by conveying means.

15. A manufacturing line according to claim 14, wherein the number of work stations are arranged in longitudinal extension of a first workstation.
